**Europäisches Patentamt**

**European Patent Office**

**Office européen des brevets**

(19)

(11) Veröffentlichungsnummer: **0 157 009**
**B1**

(12)

# EUROPÄISCHE PATENTSCHRIFT

(45) Veröffentlichungstag der Patentschrift:
07.03.90

(51) Int. Cl.⁵ : **G 01 N 21/88**, G 02 B 23/08

(21) Anmeldenummer: **84116327.2**

(22) Anmeldetag: **27.12.84**

---

(54) **Spezial-Endoskop zur optischen Rissprüfung.**

---

(30) Priorität: 03.04.84 DE 3412434
24.10.84 DE 3438971

(43) Veröffentlichungstag der Anmeldung:
09.10.85 Patentblatt 85/41

(45) Bekanntmachung des Hinweises auf die Patenterteilung: 07.03.90 Patentblatt 90/10

(84) Benannte Vertragsstaaten:
CH DE FR GB LI

(56) Entgegenhaltungen:
DE—A— 2 942 982
DE—A— 3 242 836
US—A— 4 281 929
Hobby magazin der Technik, Nr. 4 vom 13.02.84, Seite
10,11,12,14

(73) Patentinhaber: **Siemens Aktiengesellschaft**
**Wittelsbacherplatz 2**
**D-8000 München 2 (DE)**

(72) Erfinder: **Elfert, Bernd**
**Saarner Strasse 203**
**D-4330 Mülheim/Ruhr (DE)**
Erfinder: **Schölly, Werner**
**Robert-Bosch-Strasse 1-3**
**D-7809 Denzlingen (DE)**

EP 0 157 009 B1

Jouve, 18, rue St-Denis, 75001 Paris, France

**Beschreibung**

Die Erfindung bezieht sich auf ein Spezial-Endoskop zur optischen Rißprüfung gemäß Oberbegriff des Anspruchs 1.

Dabei befaßt sich die Erfindung mit dem Problem, ein solches Spezial-Endoskop in enge Spalte einführen und dabei trotzdem gute Beleuchtungs- und Abbildungsverhältnisse garantieren zu können. Ein besonderer Anwendungsfall ist z.B. die Inspektion der Stirnseiten der Radscheiben von Turbinenläufern der Scheibenbauart im Bereich der axialen Verdrehsicherungsbolzen. Diese Radscheibenpartien sind erhöhten Beanspruchungen im Betrieb ausgesetzt und müssen daher in regelmäßigen Abständen auf vorhandene Risse untersucht werden. Die Weite des Spaltes zwischen einer Radscheibe und der benachbarten beträgt in vielen Fällen nur ≈ 2 mm, und um an die zu untersuchenden Stirnflächenbereiche heranzukommen, muß das Spezial-Endoskop etwa 200 mm eingetaucht werden.

Bisher gab es für diese Untersuchungsaufgabe keine geeigneten Lösungen. Aufgrund der engen baulichen Verhältnisse war es nicht möglich, die für die Rißprüfung erforderliche UV-Lichtmenge an den Prüfort zu bringen. Man hat deshalb den Schrumpfsitz der Radscheiben lösen und diese demontieren müssen, um eine optische Untersuchung auf Anrisse durchführen zu können.

In der US-A 4 281 929 ist allerdings schon ein Endoskop zur Untersuchung von Bohrungen mit kleinem Durchmesser beschrieben. Aus dieser Schrift ist auch bekannt, daß man um eine Empfangsoptik herum mehrere Lichtleiter zur Beleuchtung des Meßortes anordnen kann. Dies ist jedoch problemlos nur möglich, wenn der Meßort vor der Stirnseite des Endoskopes liegt, während eine intensive Beleuchtung eines seitlich des Endoskopes gelegenen Meßortes mit dem beschriebenen System nicht möglich ist.

Aus der DE-OS 29 42 982 ist weiter ein optisches Beleuchtungssystem bekannt, welches einen Meßort unter verschiedenen Winkeln beleuchtet, um Einzelheiten besser sichtbar zu machen. Auch dieses Beleuchtungssystem eignet sich jedoch nicht für eine seitliche Beobachtung in engen Spalten.

Der Erfindung liegt daher die Aufgabe zugrunde, ein Spezial-Endoskop zur optischen Rißprüfung gemäß dem Gattungsbegriff zu schaffen, mit dem es ohne aufwendige Freilegung von Untersuchungsflächen durch Demontage von Bauteilen ermöglicht sein soll, in sehr engen Spalten in der Größenordnung von ungefähr 2 mm eine optische Rißprüfung der den Spalt seitlich begrenzenden Bauteile durchzuführen und dabei gute Beleuchtungs- und Abbildungsergebnisse zu erzielen. Insbesondere liegt die Aufgabe vor, das gattungsgemäße Spezial-Endoskop so auszubilden, daß damit die optische Rißprüfung der Stirnflächen von Radscheiben der Scheibenläufer von Dampfturbinen im Bereich ihrer axialen Verdrehsicherungen ermöglicht ist.

Erfindungsgemäß wird die gestellte Aufgabe bei einem Spezial-Endoskop gemäß Oberbegriff des Anspruchs 1 durch die im Kennzeichen des Anspruchs 1 angegebenen Merkmale gelöst. Vorteilhafte Weiterbildungen des Gegenstandes des Anspruchs 1 sind in den abhängigen Ansprüchen 2 bis 11 angegeben.

Die mit der Erfindung erzielbaren Vorteile sind vor allem im folgenden zu sehen: Eine Untersuchung mit einem Spezial-Endoskop nach der Erfindung stellt eine Ergänzung zu einer Ultraschall-Prüfung dar. Sie ist mit relativ geringem apparativen Aufwand möglich und läßt eine direkte Aussage über Lage, Form und radiale Erstreckung eines Fehlers zu.

Im folgenden wird anhand der Zeichnung, in welcher zwei Ausführungsbeispiele und ein Anwendungsbeispiel der Erfindung dargestellt sind, diese noch näher erläutert.

Es zeigt in vereinfachter Darstellung unter Fortlassung der für das Verständnis der Erfindung nicht erforderlichen Teile:

Fig. 1 in schematischer Darstellung ein bekanntes Endoskop mit am okularseitigen Ende aufgesetzter Spiegelreflexkamera;

Fig. 2 ein erstes Ausführungsbeispiel eines Spezial-Endoskops nach der Erfindung mit einer Röhrchen-Ausführung des schwertförmigen Sondenteils;

Fig. 3 eine vergrößerte Draufsicht auf die Sondenspitze des Spezial-Endoskops nach Fig. 2;

Fig. 4 ein zweites Ausführungsbeispiel des Spezial-Endoskops in einer Draufsicht auf die Sondenspitze, bei welchem die schwertförmige Sonde aus Plattenteilen besteht;

Fig. 5 den Gegenstand nach Fig. 4, etwas verkleinert, wobei neben dem breiteren Makro-Sondenteil noch ein Übersichts-Sondenteil vorgesehen ist;

Fig. 6 den Schnitt nach der Linie VI-VI aus Fig. 5, d. h. die eine Plattenhälfte der schwertförmigen Sonde mit eingearbeiteten Kanalhälften für die Lichtleiter und die bildleitenden Optiken;

Fig. 7 in einer Draufsicht in Phantomdarstellung den okularseitigen Anschlußkasten des Spezial-Endoskops, der in seinem Inneren u. a. die beiden verstellbaren TV-Adapter für den Makro- und den Übersichts-Sondenteil sowie den Lichtleiteranschluß zur Einkopplung der UV-Strahlung enthält, wobei außerdem ein keilförmig zulaufender Schwertträgerfortsatz und — verkürzt — die schwertförmige Sonde selbst dargestellt sind;

Fig. 8 die Seitenansicht der Anordnung nach Fig. 7;

Fig. 9 eine Darstellung des Prinzips der Ankoppelung einer UV-Lichtquelle an die Lichtleiter;

Fig. 10 in einem Diagramm den Verlauf der spektralen Emission abhängig von der auf der Abszissenachse aufgetragenen Wellenlänge bei einer im UV-Bereich emittierenden geeigneten Quecksilberdampf-Höchstdrucklampe, wobei die spektrale Emission auf Ordinatenachse in relativen Einheiten und die Wellenlänge auf der Abszissenachse in nm aufgetragen sind;

Fig. 11 im Ausschnitt zwei einander benachbarte, auf eine Welle aufgeschrumpfte Radscheiben des Niederdruckläufers einer Dampfturbine, wobei die einander zugekehrten Stirnflächen der Radscheiben im Bereich X und im Bereich der axialen Verdrehsicherungsbolzen hinsichtlich ihrer Oberflächenstruktur zu untersuchen sind;

Fig. 12 die Einzelheit X vergrößert, wobei ein einzelner axialer Verdrehsicherungsbolzen strichpunktiert in seinen Konturen angedeutet ist, und

Fig. 13 den Schnitt XIII-XIII aus Fig. 12, und zwar verkleinert und über den gesamten Umfang gesehen, über welchen fünf axiale Verdrehsicherungsbolzen verteilt angeordnet sind und für einen dieser Anrisse in den benachbarten Radscheibenbereich angedeutet sind.

In der Medizin versteht man unter einem Endoskop ein Spiegelinstrument zur Untersuchung von Körperinnenräumen. Endoskope erlauben durch direkte Besichtigung der Organe (Endoskopie) in einzelnen Fällen die Erfassung von Krankheiten, die durch klinische, Laboratoriums- oder Röntgenuntersuchungen unerkannt bleiben. Endoskope sind aber inzwischen nicht nur in der medizinischen Technik, sondern ganz allgemein in der Technik verbreitet.

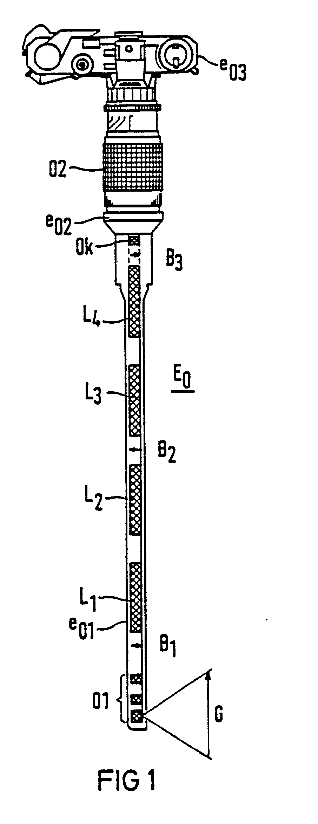

Fig. 1 illustriert schematisch die optischen Verhältnisse bei einem Endoskop $E_0$, wie es zur vergrößernden Betrachtung und Bildaufnahme von Modellen verwendet wird, z. B. von Landschafts- und Bebauungsplänen, die im Modell vorliegen (vgl. hierzu auch Zeitschrift « hobby Magazin der Technik », Nr. 4 vom 13.2.84, S. 10, 11, 12 und 14).

Das Objektiv 01 am unteren Ende des Endoskopschaftes $e_{01}$ erzeugt bei $B_1$ ein Bild des Gegenstandes G, wobei die Umlenkung der seitlich einfallenden Objektstrahlen in Richtung der Längsachse des Endoskopschaftes durch ein geeignetes Prismen-Linsen-System erfolgt. Das Bild bei $B_1$ wird durch ein optisches System von Stablinsen $L_1$ und $L_2$ an der Stelle $B_2$ abgebildet. Das Bild $B_2$ ist gegenüber $B_1$ höhen- und seitenvertauscht, weshalb $L_1$ und $L_2$ auch « Umkehrsystem » genannt werden. Ein weiteres Umkehrsystem $L_3/L_4$ bildet $B_2$ bei $B_3$ ab. Das Bild $B_3$ kann dann mit dem Okular Ok betrachtet bzw. mit der Kamera aufgenommen werden. Dargestellt ist eine am Endoskopansatz $e_{02}$ montierte Spiegelreflexkamera $e_{03}$. Es könnten über geeignete Adapter jedoch auch TV-Kameras am Endoskopansatz $e_{02}$ anmontiert werden. Das Licht zur Beleuchtung der Modelle wird bei diesem bekannten Endoskop entweder durch eine eingebaute (nicht dargestellte) Fiberglas-Leitung oder durch Studio-Scheinwerfer geliefert.

Dieses bekannte Endoskop ist indessen nicht zur Untersuchung der Oberflächenstruktur in engen Spalten geeignet. Demgegenüber befaßt sich die Erfindung mit einem Spezial-Endoskop zur Untersuchung der Oberflächenstruktur in engen Spalten, wobei Spaltweiten bis hinunter zu 2 mm und sogar noch darunter auftreten können. Hierbei besteht das besondere Problem darin, zum einen die Sonde des Spezial-Endoskops in diesen engen Spalt einzufahren und zu positionieren, und darin, in diesem engen Spalt die erforderliche Beleuchtungsstärke zu erzeugen.

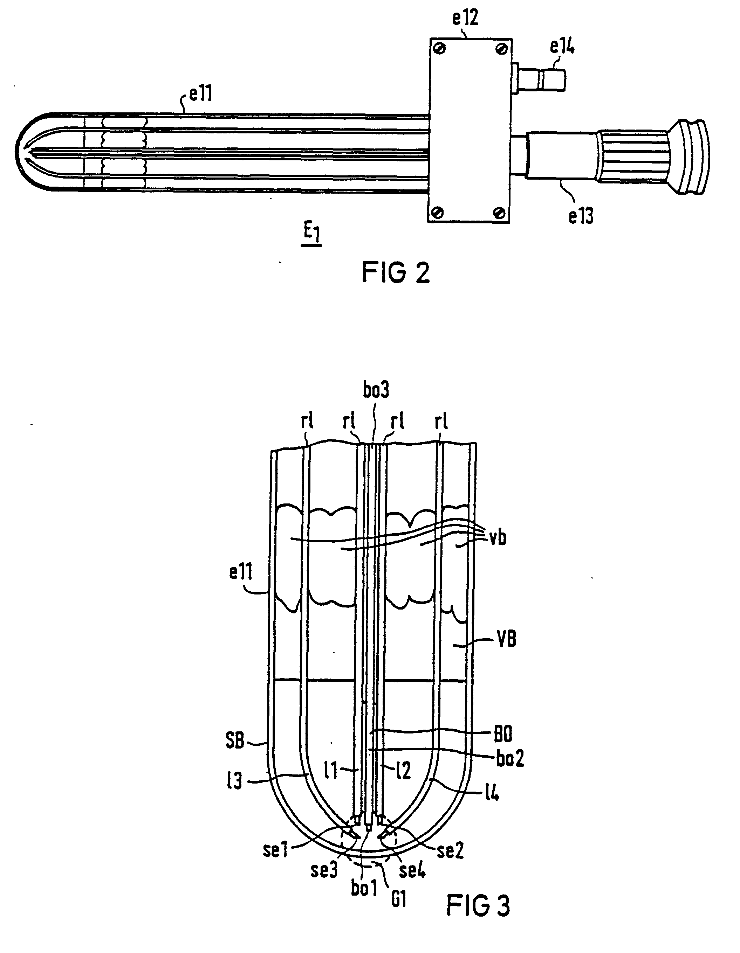

Fig. 2 und 3 zeigen ein erstes Ausführungsbeispiel eines solchen Spezial-Endoskops $E_1$, bestehend aus einer schwertförmigen Sonde $e_{11}$, einem die Sonde $e_{11}$ und das Okular $e_{13}$ tragenden Anschlußkasten $e_{12}$ mit Anschlußstelle $e_{14}$ für ein nicht näher dargestelltes Lichtleiterkabel und dem schon erwähnten Okular $e_{13}$. Das Spezial-Endoskop $E_1$ dient, wie gesagt, zur Untersuchung der Oberflächenstruktur in engen bzw. sehr engen Spalten, wobei die zu inspizierenden Oberflächenbereiche der Bauteile mittels Lichtquellen über die bildbeleuchtenden Optiken l1 bis l4 (siehe Fig. 3) angestrahlt und die vom zu untersuchenden, gestrichelt angedeuteten Oberflächenbereich G1 reflektierten Lichtwellen über wenigstens eine bildleitende Optik BO in Form von Linsen- und/oder Lichtleiter-Systemen ein reelles Bild an einem Beobachtungsgerät (Okular e13) und/oder einem Registriergerät (also fotografische Kamera $e_{03}$ nach Fig. 1 oder TV-Kamera) entstehen lassen. Im Spezialfall der Rißuntersuchung, d. h. im Falle der optischen Rißprüfung von auf eventuelles Rißwachstum zu untersuchenden Bauteilen, kommt noch hinzu, daß die zu inspizierenden Oberflächenbereiche — nach vorheriger Reinigung — mit einem fluoreszierende Eigenschaften aufweisenden Penetriermittel benetzt und mittels UV-Licht angestrahlt werden, dessen an der penetrierten Oberflächenstruktur — G1 — reflektierte Strahlen im sichtbaren Frequenzbereich liegen. Das in Fig. 2 und 3 dargestellte Spezial-Endoskop dient bevorzugt zu einer solchen optischen Rißprüfung in Spalten, die eine Spaltweite bis hinab zu 2 mm oder noch darunter aufweisen.

Erfindungsgemäß sind nun in unmittelbarer Nachbarschaft der Empfangs-Endfläche bo1 von wenigstens einer, in einem engen Kanal bo2 gleichförmigen Querschnitts untergebrachten, vergrößernden bildleitenden Optik BO die Sende-Endflächen se1, se2, se3, se4 mehrerer, den Meßort G1 beleuchtender und fächerförmig um die Empfangs-Endfläche bo1 gruppierter Lichtleiterstränge l1 bis l4 am Ende der schwertförmigen Sonde e11 so angeordnet, daß das UV-Licht oder allgemein das Licht von den Sende-Endflächen se1-se4 auf den Meßort G1 und von dort als sichtbares, reflektiertes Licht auf die Empfangs-Endfläche bo1 geworfen wird.

Beim Spezial-Endoskop $E_1$ nach Fig. 2 und 3 wird der Kanal bo2 für die bildleitende Optik BO von einem Röhrchen bo3 gebildet, und auch die Lichtleiterstränge l1 bis l4 der bildbeleuchtenden Optiken sind in Röhrchen rl untergebracht. Das Röhrchen bo3 der bildleitenden Optik BO ist in der Mittellinie oder etwa in der Mittellinie der schwertförmigen Sonde e11 angeordnet, und die Röhrchen bo3 der bildleitenden Optik BO und rl der bildbeleuchtenden Optiken bzw. der zugehöri-

gen Lichtleiterstränge l1 bis l4 einschließlich ihrer Sende- und Empfangs-Endflächen bo1, se1 bis se4 sind von einem bogenförmigen Schutzbügel SB umgeben, welcher die Schwertaußenkontur definiert. Die Röhrchen rl der Lichtleiterstränge l1 bis l4 und das Röhrchen bo3 der bildleitenden Optik BO sind nun durch ein Versteifungsblatt VB miteinander verbunden und in ihrer Relation zueinander fixiert. Im dargestellten Ausführungsbeispiel sind über die Länge der schwertförmigen Sonde e11 verteilt Lötstellen vb vorgesehen, mittels welchen das Versteifungsblatt aus einem lötfähigen Blech, z. B. Cu oder Messing, mit den einzelnen Röhrchen rl, bo3 verbunden ist. Letztere bestehen deshalb ebenfalls aus einem lötfähigen Material, z. B. aus Kupfer. Die Ausführung $E_1$ des Spezial-Endoskops ist so einfach aufgebaut, daß sie sich labormäßig herstellen läßt.

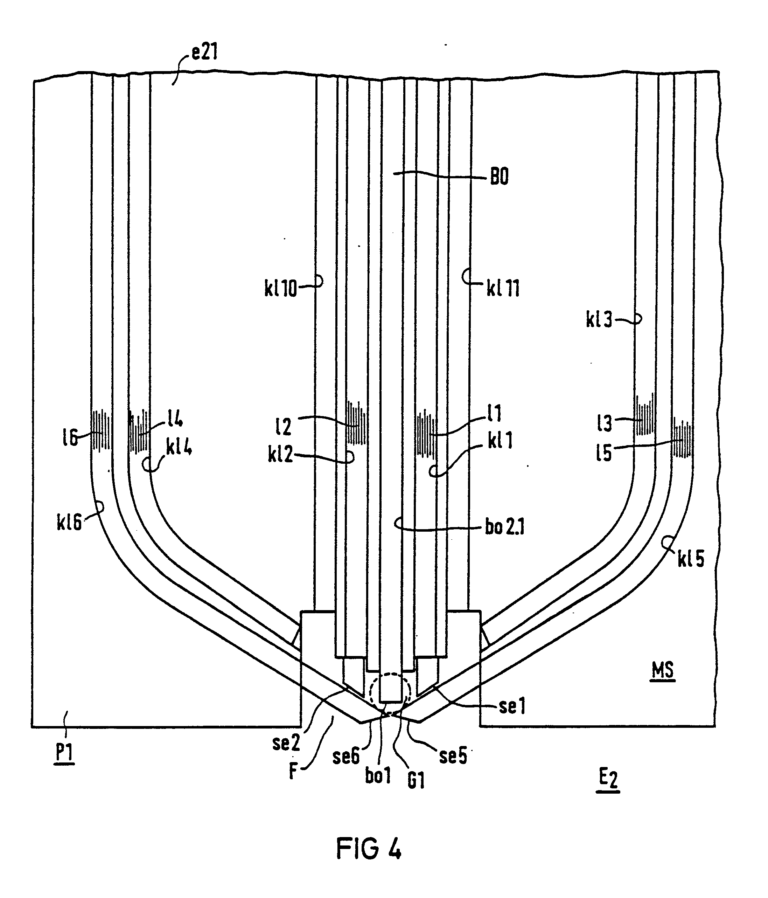

Ein zweites Ausführungsbeispiel eines Spezial-Endoskops $E_2$ ist für eine Fertigung in größeren Stückzahlen geeignet und hat außerdem den Vorteil, daß die Kanäle für die bildleitenden und bildbeleuchtenden Optiken ohne großen Justieraufwand eindeutig definiert sind. Diese Ausführung wird zunächst anhand der Fig. 4 bis 6 erläutert. Man erkennt, daß der Kanal bo2.1 für die bildleitende Optik BO und die Kanäle für die Lichtleiterstränge l1 bis l6 der bildbeleuchtenden Optiken als im Querschnitt halbkreisförmige Kanalhälften kl1 bis kl6 in je eine Plattenhälfte P1 (und sinngemäß in eine zu P1 deckungsgleiche, aber nicht dargestellte zweite Plattenhälfte) zueinander deckungsgleich eingearbeitet sind. Fig. 4 zeigt den Makro-Sondenteil MS, und zwar die eine aufgeklappte Plattenhälfte mit den eingearbeiteten Kanälen kl1 bis kl6 für die Lichtleiterstränge l1 bis l6, welch letztere lediglich an ihren Enden und auf einem Teilstück schematisch dargestellt sind. Ferner sind aus Fig. 4 zwei Vorratskanäle kl10, kl11 erkennbar, welche für den Fall, daß noch eine höhere Beleuchtungsstärke gewünscht wird, mit zusätzlichen Lichtleitersträngen bestückt werden könnten, die sinngemäß mit l10 und l11 zu bezeichnen wären. Im Zentrum bzw. mittig dieses Makro-Sondenteils MS nach Fig. 4 ist in den Kanal bo2.1 die bildleitende Optik BO eingefügt, die an ihrem Ende mit ihrer Empfangs-Endfläche bo1 als Prisma ausgeführt ist, so daß die bildleitende Optik auf die seitlich zur schwertförmigen Sonde e11 befindlichen Oberflächenstruktur bzw. auf den entsprechenden Bildfleck G1 ausgerichtet ist. Dementsprechend sind auch die Sende-Endflächen se1 bis se6 der lichtleitenden Stränge l1 bis l6 unter Berücksichtigung des Brechungsindex so zur Längsachse der Lichtleiterstränge abgewinkelt, daß die von ihnen gesendeten Lichtstrahlen zum einen möglichst verlustfrei auf den Bildfleck ausgerichtet und von diesem dann auf die Sende-Empfangsfläche bo1 reflektiert werden.

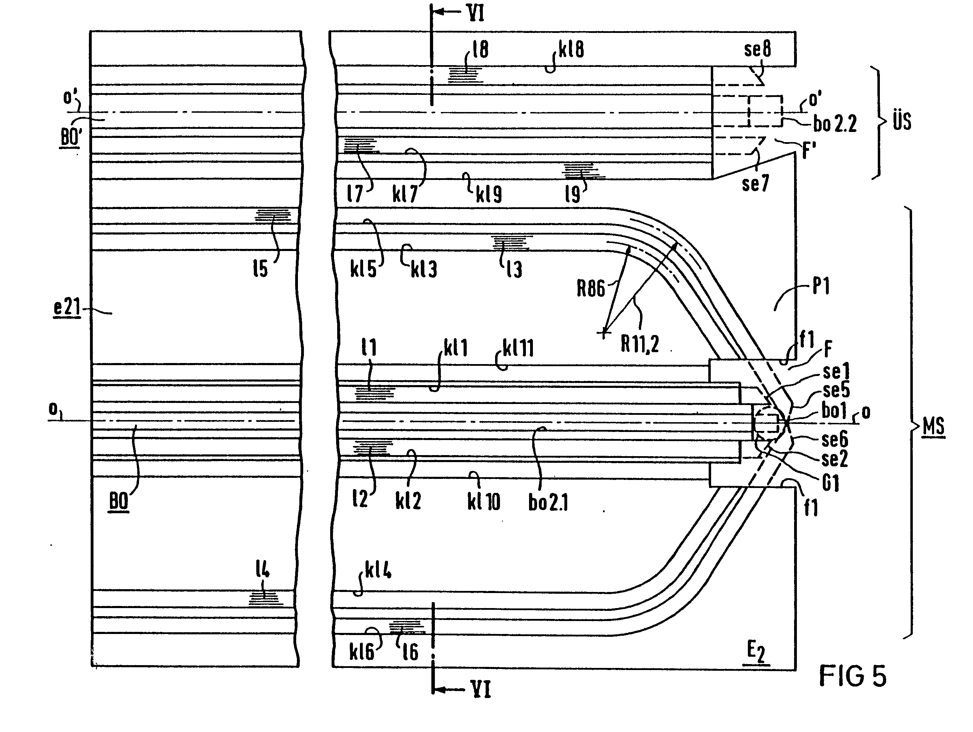

Die Plattenhälften P1 (und die deckungsgleiche, nicht dargestellte andere Plattenhälfte P2) sind im Bereich der Enden und der Sende- und Empfangs-Endflächen se1 bis se6; bo1 der bildbeleuchtenden Optiken l1 bis l6 und der bildleitenden Optik BO ausgespart, wie es Fig. 4 und Fig. 5 zeigen, siehe Randaussparung F.

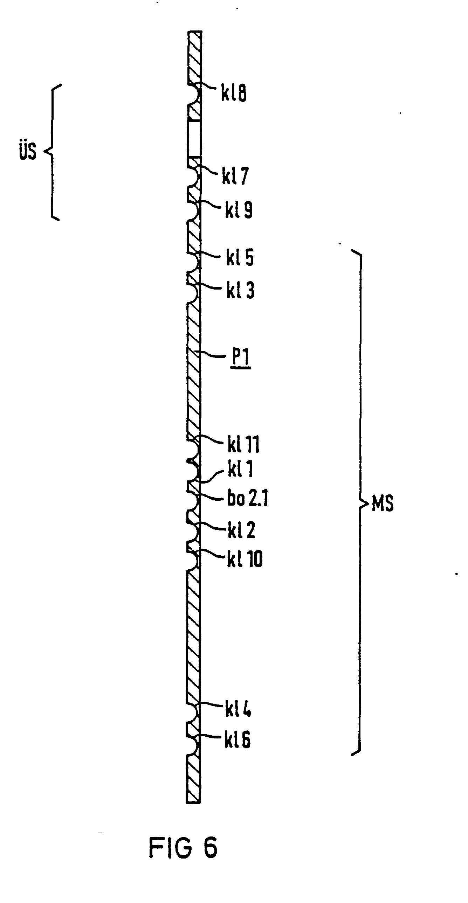

Wie es Fig. 5 in Verbindung mit Fig. 6 zeigt, weist die schwertförmige Sonde e21, welche durch Bestücken der einen Plattenhälfte P1 (bzw. P2) mit den bildleitenden und bildbeleuchtenden Optiken und durch Zusammenfügen der beiden Plattenhälften P1, P2 entstanden ist, einen breiteren Makro-Sondenteil MS mit der vergrößern den bildleitenden Optik BO zur eigentlichen Rißinspektion und einen benachbarten Übersichts-Sondenteil ÜS auf, welch letzterer zur Orientierung und zur Positionierung des Makro-Sondenteils MS dient und dessen Abbildungsfaktor $V_2$ in den Grenzen zwischen 0,5 und $V_1$ liegt, wobei $V_1$ die lineare Vergrößerung des Makro-Sondenteils MS bedeutet. Die bildleitende Optik des Übersichts-Sondenteil ÜS ist BO' bezeichnet, ihre bildbeleuchtenden Optiken sind wieder durch Lichtleiterstränge gebildet, in diesem Falle die Lichtleiterstränge l7 bis l9, von denen der Lichtleiterstrang l9 der besseren Übersichtlichkeit wegen an seinem Ende nicht dargestellt ist.

Die Kanäle für die bildleitenden und bildbeleuchtenden Optiken können in den Plattenhälften P1, P2 durch Präzisionsguß oder durch Präzisionsabtragverfahren, z. B. Fräsen, Schleifen oder Elektroerosion hergestellt werden.

Wie es Fig. 5 und 6 zeigen, ist die Anordnung dieser Kanäle beidseits der optischen Achse o-o der vergrößernden bildleitenden Optik BO des Makro-Sondenteils MS von besonderer Art. Mindestens je ein Lichtleiterstrang l1, l2 einer ersten Gruppe bildbeleuchtender Optiken ist unmittelbar benachbart und achsparallel zur optischen Achse o-o der bildleitenden Optik BO angeordnet. In den Empfangs-Bereich der Empfangs-Endfläche bo1 der bildleitenden Optik BO mündet nun eine zweite Gruppe bildbeleuchtender Optiken l5, l6 mit ihren Sende-Endflächen se5, se6. Diese zweite Gruppe weist mindestens zwei weitere Lichtleiterstränge l5, l6 auf, von denen jeder auf je einer Seite der optischen Achse o-o der bildleitenden Optik BO und mit Abstand zu den Lichtleitersträngen l1, l2 der ersten Gruppe der bildbeleuchtenden Optiken sowie in seinem Endbereich mit einem Krümmungsradius R 11,2 in Richtung auf den Empfangs-Bereich bo1 der bildleitenden Optik BO so verlegt ist, daß seine Sende-Endfläche se5, se6, benachbart zu den Sende-Endflächen se1, se2 der ersten Gruppe bildbeleuchtender Optiken l1, l2 den Meßort G1 beleuchtet. Diese zweite Gruppe der bildbeleuchtenden Optiken umfaßt, wie es Fig. 4 und Fig. 5 verdeutlichen, insgesamt vier Lichtleiterstränge l3 bis l6, von denen je ein Paar l3 bis l5 und l4 bis l6 auf je einer Längsseite der bildleitenden Optik BO verlegt ist. Im Bereich des Fensters F sind der Übersichtlichkeit der Darstellung wegen die Enden der Lichtleiterstränge l3 und l4 nicht eingezeichnet. Bei der ersten Gruppe der bildbeleuchtenden Optiken sind lediglich die beiden Kanäle kl1 und kl2 bestückt, wie bereits erwähnt; die Kanäle kl10 und kl11 können als Vorratskanäle im Bedarfsfalle weitere Lichtleiterstränge aufnehmen; mit Vorteil dienen sie jedoch als Sperrluftkanäle, die während eines Spül- und Reinigungsvorganges für den zu untersuchenden Oberflächenbereich einen Luftschleier zum Schutz gegen Verschmutzung der Optiken BO, bo1 ; se1, se2 etc. im Bereich des Fensters F erzeugen. Ein entsprechender, der Luftführung dienender Leerkanal kann auch beim Übersichts-Sondenteil ÜS vorgesehen sein.

Fig. 5 und Fig. 6 zeigen auch, daß der Übersichts-Sondenteils ÜS außer seiner mittigen bildleitenden Optik BO' mindestens je eine bildbeleuchtende Optik I7, I8 auf je einer Seite der bildleitenden Optik BO' in achsparalleler Anordnung zur optischen Achse o'-o' der bildleitenden Optik BO' umfaßt. Zur noch besseren Beleuchtung des Meßortes ist jedoch vorgesehen, daß auf der dem Makro-Sondenteil MS zugewandten Längsseite des Übersichts-Sondenteils ÜS ein Doppelstrang der bildbeleuchtenden Optiken I7 und I9 angeordnet ist. Die Kanalfelder des Makro-Sondenteils und des Übersichts-Sondenteils MS, ÜS verlaufen innerhalb der Plattenhälften P1 (und der nicht dargestellten Plättenhälfte P2) achsparallel zueinander, abgesehen von den Krümmungsradien R11,2 der Kanäle kl5 und kl6 sowie abgesehen von den Krümmungsradien R86 der Kanäle kl3 und kl4. Jedoch verlaufen die gekrümmten Kanalteile der besseren Raumausnutzung wegen wiederum parallel zueinander und münden ebenso wie die geraden Kanalteile in die Randaussparung F.

Letztere ist im Bereich der Enden und der Sende- und Empfangs-Endflächen se1 bis se6 ; bo1 der bildbeleuchtenden Optiken I1 bis I6 und der bildleitenden Optik BO als getreppte Randaussparung ausgeführt, wobei der Plattenkanal bo2.1 für die bildleitende Optik BO am weitesten vorspringt, die Plattenkanäle der ersten Gruppe bildbeleuchtender Optiken I1, I2 demgegenüber zurückgesetzt sind und die Plattenkanäle der zweiten Gruppe bildbeleuchtender Optiken I3, I5 bzw. I4, I6 an winkligen Seitenflanken f1 der Randaussparung F münden.

Auch der Plattenbereich des Übersichts-Sondenteils ÜS kann im Empfangsbereich seiner bildleitenden Optik BO' mit einer Randaussparung F' versehen sein, innerhalb welcher die Empfangs- und Sende-Endflächen se8, se9 ; bo2.2 seiner bildleitenden Optiken I8, I7 (und sinngemäß se9 von I9) sowie seiner bildbeleuchtenden Optik BO' angeordnet sind.

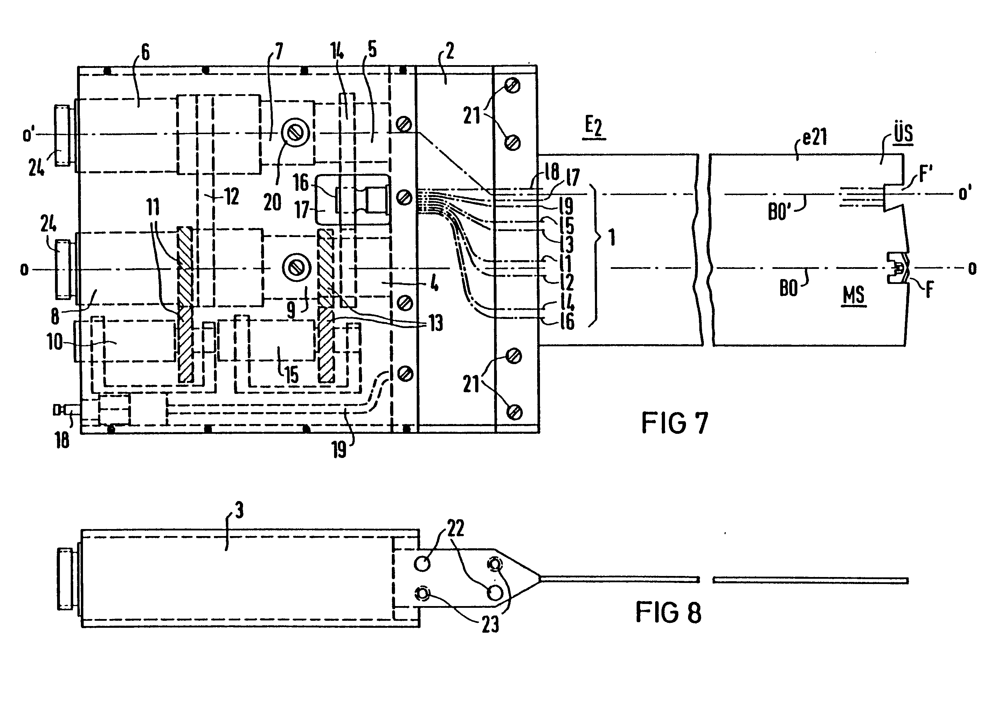

Fig. 7 und 8 zeigen die Gesamtanordnung des Spezial-Endoskops mit seinem Sondenschwert e21 und der gestrichelt angedeuteten Anordnung 1 der auf die einzelnen Kanäle aufgefächerten Lichtleiterstränge (bildbeleuchtende Optiken) I1 bis I9. Mit 2 ist ein Schwerthaltekörper bezeichnet, der zum Schwert e21 hin beidseits abgeschrägt mit einer 30°-Schräge keilförmig zuläuft. 3 ist das Anschlußgehäuse, in welchem untergebracht sind :

das Maskroskop 4 mit Fokussierantrieb ;

das Übersichts-Endoskop 5, ebenfalls mit Fokussierantrieb ;

der TV-Adapter 6 mit Bildgrößenverstellung einschließlich seiner Steckkupplung 7 zum Übersichts-Endoskop 5 ;

der TV-Adapter 8 mit Bildgrößenverstellung und mit Steckkupplung 9 zum Makroskop 4 ;

der Minimotor 10 zum Antrieb der Bildvergrößerung bzw. Bildgrößenverstellung. Es handelt sich dabei insbesondere um einen 12 Volt-Motor ;

der Zahnradantrieb 11 zur Bildvergrößerung bzw. Bildgrößenverstellung ;

der Zahnriemenantrieb 12 für die Bildgrößenverstellung am Übersichts-Endoskop 5 (bei Bedarf nachrüstbar) ;

der Zahnradantrieb 13 zur Einstellung der Bildschärfe bzw. zur Fokussierung am Makroskop 4 ;

der Zahnriemenantrieb 14 für die Fokussierung am Übersichts-Endoskop 5 (bei Bedarf nachrüstbar) ;

der Minimotor 15 (12 Volt) für den Antrieb der Fokussierung ;

der Lichtleiteranschluß 16. Hier kann über eine Steckkupplung (nicht dargestellt) ein externes UV-Lichtleiterkabel angeschlossen werden ;

der Bedienungsschacht 17 für die Lichtleiter-Kupplung ;

die Luftanschlußkupplung 18 mit Ventil ;

die Luftleitung 19 ;

der Bedienungsschacht 20 für die Steckkupplung der TV-Adapter und

die Aufnahmegewinde 24 für die (nicht dargestellten TV-Kameras).

Ferner sind in Fig. 7 und 8 mit 21 Befestigungsschrauben für den Grundkörper 2 und das Anschlußgehäuse 3 bezeichnet, mit 22 Bohrungen für Paßstifte und mit 23 Befestigungsgewinde. Die Positionen 22 und 23 dienen zur Befestigung des Spezial-Endoskops an einem Manipulatorarm o. dgl. Die Fokussierung des Makroskops bzw. der entsprechenden bildleitenden Optik BO erfolgt längs der Achse o-o. Zur Fokussierung des Übersichts-Sondenteils ÜS dient im allgemeinen die Feineinstellung des Spezial-Endoskops mit einem Manipulator o. dgl. Es kann jedoch auch ein gesonderter Fokussierantrieb, wie erwähnt, vorgesehen sein. Im dargestellten Beispiel $E_2$ ist beim Übersichts-Sondenteil der Lichtweg der bildleitenden Optik BO' über Prismensysteme umgelenkt (siehe abgeknickte optische Achse o'-o').

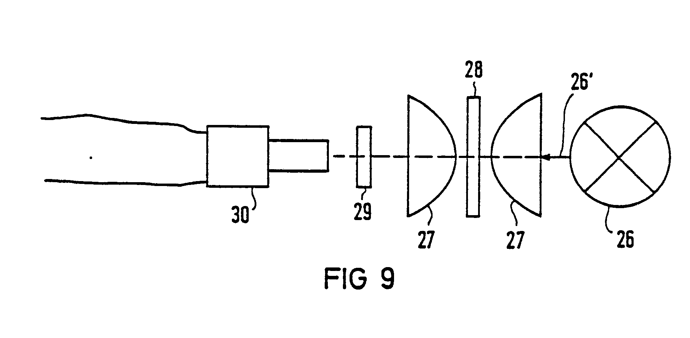

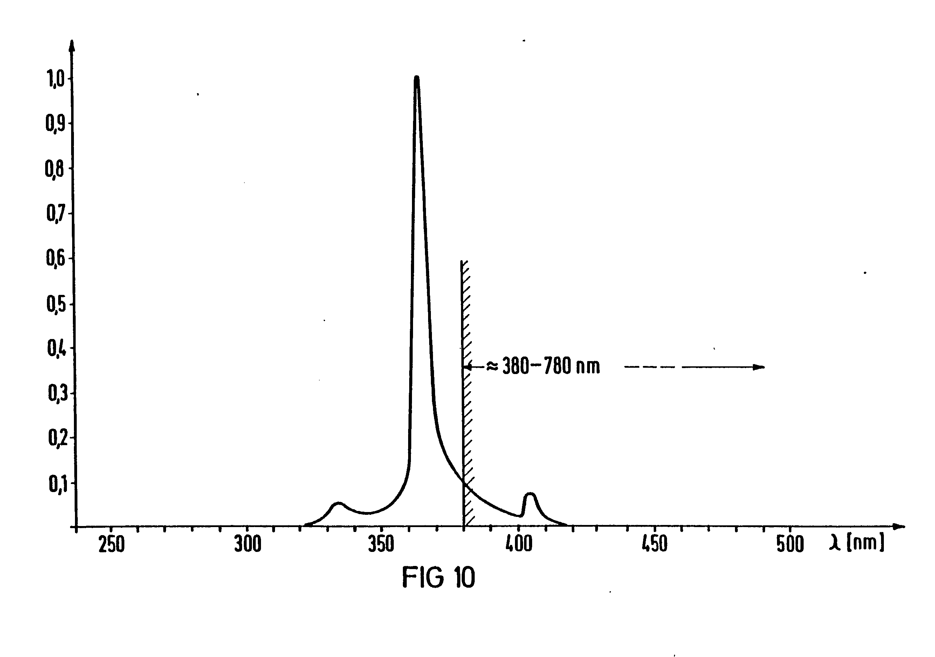

Fig. 9 zeigt das Prinzip der Ankopplung einer UV-Lichtquelle an ein Lichtleiterbündel. Von der Quecksilber-Höchstdrucklampe 26 mit einer spektralen Emission gemäß Fig. 10 nehmen die UV-Lichtstrahlen 26' ihren Weg durch die erste der beiden asphärischen Linsen 27 aus Quarz, welche zur Lichtkonzentration von der Lampe 26 auf die jeweiligen Lichtleiter dienen. Zwischen den beiden asphärischen Linsen 27 ist ein spezieller Wärmeschutzfilter 28 mit steiler Absorptionskante angeordnet, der die UV-Strahlung möglichst ungedämpft durchläßt und die IR-Strahlung möglichst steil absorbiert. Nach Durchgang durch die zweite der asphärischen Linsen 27 nimmt das Strahlenbündel 26' seinen Weg noch durch einen speziellen Interferenz-Filter 29, welcher die Aufgabe hat, alle Strahlung, welche vom mit UV angeregten Penetriermittel abgegeben wird, aber von der TV-Kameraröhre nicht mehr optimal empfangen wird, zu unterdrücken. Schließlich tritt das Strahlenbündel 26' in das Lichtleiterbündel 30 ein.

Die verwendete Quecksilberdampf-Höchstdrucklampe hat eine spektrale Emission mit einem ausgeprägten Maximum im Wellenbereich zwischen 360 und 370 nm, wie in Fig. 10 dargestellt. Der sichtbare Wellenlängenbereich, der bekanntlich etwa zwischen 380 und 780 nm liegt, ist im Diagramm angedeutet.

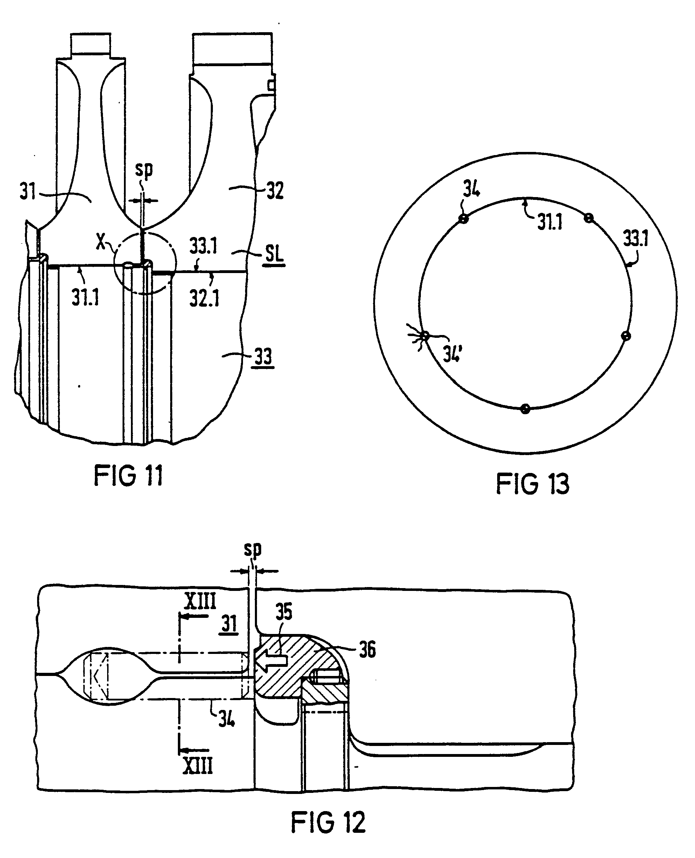

Fig. 11 demonstriert ein bevorzugtes Anwendungsgebiet des Spezial-Endoskops zur Rißprüfung bei dem Scheibenläufer SL der Niederdruckteilturbine eines Turbosatzes, wobei zwei einander benachbarte Radscheiben 31, 32 beispielsweise dargestellt sind, welche jeweils mit den Innenumfang 31.1, 32.1 ihrer Nabenteile auf den Außenumfang 33.1 der Welle 33 aufgeschrumpft sind. Im Nabenbereich ist ein axialer Spalt sp zwischen den einander benachbarten Radscheiben 31, 32 (bzw. bei den anderen Radscheiben des Scheibenläufers) vorgesehen, über welchen das Spezial-Endoskop mit seiner schwertförmigen Sonde in denjenigen Bereich eingefahren werden kann, bei dem die Möglichkeit der Entstehung von Rissen durch Spannungsrißkorrosion im Bereich der axialen Verdrehsicherungen bzw. axialen Verdrehsicherungsbolzen besteht.

Ein solcher axialer Verdrehsicherungsbolzen ist in der vergrößerten Einzelheit X (Fig. 12) bei 34 angedeutet. Zu inspizieren ist über den Spalt sp mit dem Spezial-Endoskop insbesondere der durch den Pfeil 35 markierte stirnseitige Bereich der Radscheibe 31 (Bolzensitzflächen). Der gegenüberliegende Bereich mit dem Zentrierring 36 unterliegt dagegen nicht einer rißkritischen Materialbeanspruchung, so daß sich insoweit eine Inspektion erübrigt, wenn sie auch grundsätzlich möglich wäre.

Fig. 13 zeigt noch, daß über den Umfang der Radscheiben-Sitzflächen gesehen fünf axiale Verdrehsicherungen 34 gleichmäßig über den Umfang verteilt vorgesehen sind. An der Stelle 34' ist ein möglicher Rißverlauf angedeutet.

## Patentansprüche

1. Spezial-Endoskop zur Untersuchung der Oberflächenstruktur in engen Spalten, insbesondere zur optischen Rißprüfung von auf eventuelles Rißwachstum zu untersuchenden Bauteilen, wobei das Endoskop wenigstens eine bildleitende Optik (BO) in Form eines Linsen- und/oder Lichtleiter-Systems aufweist, welche ein reelles Bild an einem Beobachtungs- und/oder Registriergerät entstehen läßt, wobei weiter mit einer Lichtquelle verbundene, den Meßort beleuchtende Optiken (l1-l4 ; l1-l6) vorhanden sind, gekennzeichnet durch folgende Merkmale :

   a) am Ende einer schwertförmigen Sonde (e11, e21) ist seitlich die Empfangs-Endfläche (bo1) von wenigstens einer in einem engen Kanal (bo2, bo2.1) gleichförmigen Querschnitts untergebrachten, vergrößerten bildleitenden Optik (BO) angeordnet ;

   b) zur Beleuchtung des neben dem Ende der schwertförmigen Sonde (e11, e21) liegenden Meßortes (G1) sind in unmittelbarer Nachbarschaft dieser Empfangs-Endfläche (bo1) die seitlich gerichteten Sende-Endflächen (se1-se4 ; se1-se6) mehrerer, fächerförmig aufeinander zulaufender, den Meßort beleuchtender Lichtleiterstränge (l1-l4 ; l1-l6) gruppiert ;

   c) beidseits der optischen Achse (o-o) der vergrößernden bildleitenden Optik (BO) ist mindestens je ein Lichtleiterstrang (l1, l2) einer ersten Gruppe bildbeleuchtender Optiken unmittelbar benachbart und achsparallel zur optischen Achse (o-o) der bildleitenden Optik (BO) angeordnet ;

   d) benachbart dem Empfangs-Bereich der Empfangs-Endfläche (bo1) der bildleitenden Optik (BO) mündet eine zweite Gruppe bildbeleuchteter Optiken (l3-l6) mit ihren Sendeendflächen (se3-se6), welche mindestens zwei weitere Lichtleiterstränge (l5, l6) aufweist, von denen jeder auf je einer Seite der optischen Achse (o-o) der bildleitenden Optik (BO) und mit Abstand zu den Lichtleitersträngen (l1, l2) der ersten Gruppe der bildbeleuchtenden Optiken sowie in seinem Endbereich mit einer Krümmung (R11, 2) in Richtung auf den Empfangsbereich der bildleitenden Optik (BO) verlegt ist, und die ebenfalls den Meßort (G1) beleuchten.

2. Spezial-Endoskop nach Anspruch 1, dadurch gekennzeichnet, daß der Kanal (bo2) für die bildleitende Optik (BO) von einem Röhrchen (bo3) gebildet wird und daß auch die Lichtleiterstränge (l1-l4) der bildbeleuchtenden Optiken in Röhrchen (rl) untergebracht sind, daß das Röhrchen (bo3) der bildleitenden Optik (BO) etwa in der Mittellinie der schwertförmigen Sonde (c11) angeordnet ist, daß die Röhrchen (bo3 ; rl) der bildleitenden Optik (BO) und der bildbeleuchtenden Optiken (l1-l4) einschließlich ihrer Sende- und Empfangs-Endflächen (bo1 ; se1-se4) von einem bogenförmigen Schutzbügel (SB) umgeben sind, welcher die Schwertaußenkontur definiert, und daß die Röhrchen (bo3 ; rl) sowie der Schutzbügel (SB) durch ein Versteifungsblatt (VB) miteinander verbunden und in ihrer Relation zueinander fixiert sind.

3. Spezial-Endoskop nach Anspruch 1, dadurch gekennzeichnet, daß der Kanal (bo2.1) für die bildleitende Optik (BO) und Kanäle für die Lichtleiterstränge der bildbeleuchtenden Optiken als im Querschnitt halbkreisförmige Kanalhälften (kl1-kl6, kl10, kl11) in je eine Plattenhälfte (P1, P2) zueinander deckungsgleich eingearbeitet sind, daß die Plattenhälften (P1, P2) im Bereich der Enden und der Sende- und Empfangs-Endflächen (bo1 ; se1-se6) der bildbeleuchtenden und bildleitenden Optiken (l1-l6 ; BO) eine Aussparung (F) aufweisen und daß die beiden in ihren Kanälen mit den bildbeleuchtenden und bildleitenden Optiken bestückten, zusammengefügten Plattenhälften die schwertförmige Sonde (e21) ergeben.

4. Spezial-Endoskop nach einem der Ansprüche 1 bis 3, dadurch gekennzeichnet, daß die schwertförmige Sonde (e21) einen breiteren Makro-Sondenteil (MS) mit der vergrößernden bildleitenden Optik (BO) zur eigentlichen Rißinspektion und einen benachbarten Übersichts-Sondenteil (ÜS) aufweist, der zur Orientierung und zur Positionierung des Makro-Sondenteils (MS) dient und dessen Abbildungsfaktor $V_2$ in den Grenzen $0,5 \leq V_2 < V_1$ liegt, wobei $V_1$ die lineare Vergrößerung des Makro-Sondenteils (MS) bedeutet.

5. Spezial-Endoskop nach Anspruch 1, dadurch gekennzeichnet, daß die erste Gruppe bildbeleuchtender Optiken vier Lichtleiterstränge umfaßt, von denen je ein Paar auf je einer Längsseite der bildleitenden Optik (BO) achsparallel zu deren optischer Achse (o-o) angeordnet ist.

6. Spezial-Endoskop nach einem der vorhergehenden Ansprüche, dadurch gekennzeichnet, daß die zweite Gruppe der bildbeleuchtenden Optiken vier Lichtleiterstränge (l3-l6) umfaßt, von denen je ein Paar (l3-l5, l4-l6) auf je einer Längsseite der bildleitenden Optik (BO) verlegt ist.

7. Spezial-Endoskop nach Anspruch 3, dadurch gekennzeichnet, daß die Aussparung (F) im Bereich der Enden und der Sende- und Empfangs-Endflächen (se1-Se6 ; bo1) der bildbeleuchtenden und bildleitenden Optiken (l1-l6 ; BO) als getreppte Randaussparung ausgeführt ist, wobei der Plattenkanal (bo2.1) für die bildleitende Optik (BO) am weitesten vorspringt, die Plattenkanäle (kl1, kl2) der ersten Gruppe bildbeleuchtender Optiken (l1, l2) demgegenüber zurückgesetzt sind und die Plattenkanäle (kl3-kl6) der zweiten Gruppe bildbeleuchtender Optiken (l3-l6) an winkligen Seitenflanken (f1) der Randaussparung (F) münden.

8. Spezial-Endoskop nach Anspruch 4, dadurch gekennzeichnet, daß der Übersichts-Sondenteil (ÜS) eine bildleitende Optik (BO') und mindestens je eine bildbeleuchtende Optik (l7, l8) auf je einer Seite der bildleitenden Optik (BO') in achsparalleler Anordnung der optischen Achsen umfaßt.

9. Spezial-Endoskop nach Anspruch 8, dadurch gekennzeichnet, daß der Übersichts-Sondenteil (ÜS) auf seiner dem Makro-Sondenteil (MS) zugewandten Längsseite einen Doppelstrang bildbeleuchtender Optiken (17-19) aufweist.

10. Spezial-Endoskop nach Anspruch 4 oder 8 und Anspruch 3, dadurch gekennzeichnet, daß in den Plattenhälften (P1, P2) des Sondenschwertes (e21) benachbart zum Kanalfeld des Makro-Sondenteils (MS) das Kanalfeld des Übersichts-Sondenteils (ÜS) angeordnet ist und daß auch der Plattenbereich des Übersichts-Sondenteils (ÜS) im Empfangsbereich seiner bildleitenden Optik (BO') mit einer Randaussparung (F') versehen ist, innerhalb welcher die Empfangs- und Sende-Endflächen (bo2.2 ; se7-se9) seiner bildleitenden und bildbeleuchtenden Optiken angeordnet sind.

11. Spezial-Endoskop nach einem der Ansprüche 2 bis 10, dadurch gekennzeichnet, daß Leerkanäle (kl10, kl11) beim Makro-Sondenteil (MS) und gegebenenfalls beim Übersichts-Sondenteil (ÜS) als Zuführkanäle für Sperrluft ausgebildet sind, mittels welchen während eines Spül- und Reinigungsvorganges für die zu untersuchenden Oberflächenbereiche (G1) ein Luftschleier zum Schutz gegen Verschmutzung der Optiken (BO, bo1 ; se1, se2, se5, s6) im Bereich des Fensters (F) und ggf. der Optiken (BO', bo2.2, se7, se8) erzeugbar ist.

## Claims

1. Specially made endoscope for the examination of the superficial structure in narrow gaps, more particularly for the optical investigation of cracks of structural parts to be examined for possible crack growth, in which case the endoscope has at least one image-conducting optical system (BO) in the form of a lens and/or light-conductor system, which allows a real image to develop on an observation device and/or recording device, in which there are, furthermore, optical systems (l1-l4 ; l1-l6) which are connected with a light source and illuminate the measuring point, characterised by the following features :

a) arranged at the end of a sword-shaped probe (e11, e21), laterally, there is the receiving end surface (bo1) of at least one magnified (sic) image-conducting optical system (BO), accommodated in a narrow channel (bo2, bo2.1) of uniform cross section ;

b) for the purpose of illuminating the measuring point (G1) which lies close to the end of the sword-shaped probe (e11, e21), in the immediate proximity of said receiving end surface (bo1), there are grouped the laterally directed transmitting end surfaces (se1-se4 ; se1-se6) of several light-conductor lanes (l1-l4 ; l1-l6) which run up onto each other in the shape of a fan and illuminate the measuring point ;

c) arranged on both sides of the optical axis (o-o) of the magnifying image-conducting optical system (BO) there is, in each case, at least one light-conductor lane (l1, l2) of a first group of image-illuminating optical systems so that it is immediately adjacent and axis-parallel to the optical axis (o-o) of the image-conducting optical system (BO) ;

d) there runs adjacent to the receiving area of the receiving end surface (bo1) of the image-conducting optical system (BO) a second group of image-illuminating optical systems (l3-l6) with its transmitting end surfaces (se3-se6), having at least two further light-conductor lanes (l5, l6), each one of which is placed on one side of the optical axis (o-o) of the image-conducting optical system (BO) in each case and at a distance from the light-conductor lanes (l1, l2) of the first group of the image-illuminating optical systems and also in its end region with a radius of curvature (R11, 2) in the direction of the receiving area of the image-conducting optical system (BO), and which likewise illuminate the measuring point (G1).

2. Specially made endoscope according to claim 1, characterised in that the channel (bo2) for the image-conducting optical system (BO) is formed by a small tube (bo3) and in that even the light-conductor lanes (l1-l4) of the image-illuminating optical systems are accommodated in small tubes (rl), in that the small tube (bo3) of the image-conducting optical system (BO) is arranged substantially in the centre line of the sword-shaped probe (c11), in that the small tubes (bo3 ; rl) of the image-conducting optical system (BO) and of the image-illuminating optical systems (l1-l4) including their transmitting and receiving end surfaces (bo1 ; se1-se4) are surrounded by an arc-shaped guard bow (SB) which defines the outer contour of the sword and in that the small tubes (bo3 ; r1) and also the guard bow (SB) are connected with each other by means of a stiffening sheet (VB) and are fixed in their relation in respect of each other.

3. Specially made endoscope according to claim 1, characterised in that the channel (bo2.1) for the image-conducting optical system (BO) and channels for the light-conductor lanes of the image-illuminating optical systems as halves of channels (kl1-kl6, kl10, kl11), which are semicircular in cross section, are, in each case, incorporated into a plate half (P1, P2) so that they are congruent with each other, in that the plate halves (P1, P2) have a recess (F) in the region of the ends and the transmitting and receiving end surfaces (bo1 ; se1-se6) of the image-illuminating and image-conducting optical systems (l1-l6 ; BO) and in that the two joined plate halves, which are equipped in their channels with the image-illuminating and image-conducting optical systems, produce the sword-shaped probe (e21).

4. Specially made endoscope according to one of the claims 1 to 3, characterised in that the sword-shaped probe (e21) has a broader macro-probe portion (MS) with the magnifying, image-conducting optical system (BO) for the actual inspection of cracks and a neighbouring general-view probe portion (ÜS) which serves to orientate and position the macro-probe portion (MS) and the representation factor $V_2$ of which lies within the limits of $0.5 \leq V_2 < V_1$, where $V_1$ stands for the linear magnification of the macro-probe portion (MS).

5. Specially made endoscope according to claim 1, characterised in that the first group of image-illuminating optical systems comprises four light-conductor lanes of which in each case one pair is arranged on each longitudinal side of the image-conducting optical system (BO) axis-parallel to the latter's optical axis (o-o).

6. Specially made endoscope according to one of the preceding claims, characterised in that the second group of the image-illuminating optical systems comprises four light conductor lanes (l3-l6), of which in each case one pair (l3-l5, l4-l6) is placed on each longitudinal side of the image-conducting optical system (BO).

7. Specially made endoscope according to claim 3, characterised in that the recess (F) in the region of the ends and the transmitting and receiving end surfaces (se1-Se6 ; bo1) of the image-illuminating and image-conducting optical systems (l1-l6 ; BO) is constructed as a stepped edge recess, in which case the plate channel (bo2.1) for the image-conducting optical system (BO) projects furthest, the plate channels (kl1, kl2) of the first group of image-illuminating optical systems (l1, l2) are set back in respect thereof and the plate channels (kl3-kl6) of the second group of image-illuminating optical systems (l3-l6) lead to angled side flanks (f1) of the edge recess (F).

8. Specially made endoscope according to claim 4, characterised in that the general-view probe portion (ÜS) comprises an image-conducting optical system (BO') and at least one image-illuminating optical system (l7, l8) on each side of the image-conducting optical system (BO') in axis-parallel arrangement to the optical axes.

9. Specially made endoscope according to claim 8, characterised in that the general-view probe portion (ÜS) has a double lane of image-illuminating optical systems (l7-l9) on its longitudinal side facing the macro-probe portion (MS).

10. Specially made endoscope according to claim 4 or 8 and claim 3, characterised in that the channel field of the general-view probe portion (ÜS) is arranged in the plate halves (P1, P2) of the probe sword (e21) adjacent to the channel field of the macroprobe portion (MS) and in that even the plate area of the general-view probe portion (ÜS) in the receiving area of its image-conducting optical system (BO') is provided with an edge recess (F'), inside which the receiving and transmitting end surfaces (bo2.2 ; se7-se9) of its image-conducting and image-illuminating optical systems are arranged.

11. Specially made endoscope according to one of the claims 2 to 10, characterised in that empty channels (kl10, kl11) are formed in the macro-probe portion (MS) and, if applicable, in the general-view probe portion (ÜS) as supply channels for sealing air, by means of which channels, during a rinsing and purification process for the superficial areas (G1) to be examined, an air fog can be generated for protection against contamination of the optical systems (BO, bo1 ; se1, se2, se5, s6) in the region of the window (F) and, if applicable, the optical systems (BO', bo2.2, se7, se8).

## Revendications

1. Endoscope spécial pour l'examen de la structure superficielle dans des fentes étroites, notamment pour le contrôle optique de fissures dans des composants, dont on doit examiner la croissance éventuelle de fissures, et dans lequel l'endoscope comporte au moins un système optique (BO) transmettant l'image, se présentant sous la forme d'un système de lentilles et/ou de guides de lumière, qui transmet une image réelle à un appareil d'observation et/ou d'enregistrement, et dans lequel, en outre, il est prévu des systèmes optiques (l1-l4 ; l1-6) reliés à une source de lumière et éclairant l'emplacement de mesure, remarquable par les caractéristiques suivantes :

a) à l'extrémité d'une sonde en forme d'épée (e11, e12) se trouve disposée, latéralement, la surface terminale de réception (bo1) d'au moins un système optique (BO) logé dans un canal étroit (bo2, bo2.1) possédant une section transversale uniforme, et transmettant une image en l'agrandissant ;

b) les surfaces terminales d'émission (se1-se4 ; se1-se6), qui sont dirigées latéralement, de plusieurs faisceaux (l1-l4 ; l1-l6) de guides de lumière, convergeant en éventail et éclairant un emplacement de mesure, sont regroupées au voisinage immédiat de ladite surface terminale de réception (bo1), pour réaliser l'éclairement de l'emplacement de mesure (G) situé à côté de l'extrémité de la sonde en forme d'épée (e11-e21) ;

c) au moins un faisceau de guides de lumière (l1, l2) d'un premier groupe de systèmes optiques éclairant l'image est disposé au voisinage immédiat de l'axe optique (o-o) du système optique (BO) transmettant l'image en l'agrandissant, et ce de manière que l'axe du faisceau soit parallèle à cet axe optique ;

d) au voisinage de la zone de réception de la surface terminale de réception (bo1) du dispositif optique (BO) transmettant l'image débouche un second groupe de systèmes optiques (l3-l6) éclairant l'image, par ses surfaces terminales d'émission (se3-se6), qui comportent au moins deux autres faisceaux (l5, l6) de guides de lumière, dont chacun est disposé respectivement d'un côté de l'axe optique (o-o) du système optique (BO) transmettant l'image et à distance des faisceaux (l1, l2) des guides de lumière du premier groupe des systèmes optiques éclairant l'image et est disposé, dans sa zone d'extrémité, de manière à présenter une courbure (R11, 2) en direction de la zone de réception du système optique (BO) transmettant l'image, et qui éclairent également l'emplacement de mesure (G1).

2. Endoscope spécial suivant la revendication 1, caractérisé par le fait que le canal (bo2) pour le système optique (BO) transmettant l'image est formé par un petit tube (bo3) et que les faisceaux (l1-l4) des guides de lumière des dispositifs optiques éclairant l'image sont logés dans des petits tubes (rl), que le petit tube (bo3) du dispositif optique (BO) transmettant l'image est disposé approximativement sur l'axe central de la sonde en forme d'épée (c11), que les petits tubes (bo3 ; rl) du dispositif optique (BO) transmettant l'image et des dispositifs optiques (l1-l4) éclairant l'image y compris leurs surfaces terminales d'émission et de réception (bo1 ; se1-se4) sont entourées par un étrier de protection (SB) en forme d'arc de cercle, qui définit le contour extérieur de l'épée, et que les petits tubes (bo3, rl) ainsi que l'étrier de protection (SB) sont reliés entre eux par l'intermédiaire d'une feuille de renforcement (VB) et sont dans une relation fixe l'un par rapport à l'autre.

3. Endoscope spécial suivant la revendication 1, caractérisé par le fait que le canal (bo2.1) pour le dispositif optique (BO) transmettant l'image et les canaux pour les faisceaux de guides de lumière des dispositifs optiques éclairant l'image sont ménagés par usinage dans des demi-plaques respectives (P1, P2), sous la forme de demi-canaux (kl1-kl16, kl10, kl11), de forme semi-circulaire en coupe transversale, en étant en recouvrement réciproque, que les demi-plaques (P1, P2) possèdent un évidement (F) dans la zone des extrémités et des surfaces terminales d'émission et de réception (bo1 ; se1-se6) des dispositifs optiques (l1-l6 ; BO) éclairant et transmettant l'image, et que les deux demi-plaques assemblées, comportant, dans leurs canaux, les dispositifs optiques éclairant et transmettant l'image, constituent la sonde en forme d'épée (e21).

4. Endoscope spécial suivant l'une des revendications 1 à 3, caractérisé par le fait que la sonde en forme d'épée (e21) possède une partie plus large formant macroscope (MS) comportant le dispositif optique (BO) transmettant l'image en les agrandissant, qui sert à réaliser l'inspection proprement dite de fissures, et une partie voisine d'observation d'ensemble (ÜS), qui sert à orienter et positionner la partie formant macroscope (MS) de la sonde et dont le facteur de grandissement $(V_2)$ se situe dans les limites $0,5 \leq V_2 < V_1$, $V_1$ désignant le grandissement linéaire fourni par la partie formant macroscope (MS) de la sonde.

5. Endoscope spécial suivant la revendication 1, caractérisé par le fait que le premier groupe de dispositifs optiques éclairant l'image comporte quatre faisceaux de guides de lumière, dont un couple respectif est disposé sur un côté longitudinal respectif du dispositif optique (BO) transmettant l'image, de manière que leur axe soit parallèle à l'axe optique (o-o) de ce dispositif optique.

6. Endoscope spécial suivant l'une des revendications précédentes, caractérisé par le fait que le second groupe des dispositifs optiques éclairant l'image comporte quatre faisceaux (l3-l6) de guides de lumière, dont un couple respectif (l3-l5, l4-l6) est disposé sur un côté longitudinal respectif du dispositif optique (BO) transmettant l'image.

7. Endoscope spécial suivant la revendication 3, caractérisé par le fait que l'évidement (F), situé dans la zone des extrémités et des surfaces terminales d'émission et de réception (se1-se6 ; bo1) des dispositifs optiques (l1-l6 ; BO) éclairant et transmettant l'image, est réalisé sous la forme d'un évidement marginal étagé, le canal (bo2.1) des plaques pour le dispositif optique (BO) transmettant l'image étant la plus en saillie, tandis que les canaux (kl1, kl2) de la plaque pour le premier groupe de dispositifs optiques (l1, l2) éclairant l'image sont au contraire en retrait et que les canaux (kl3-kl6) de la plaque pour le second groupe de dispositifs optiques (l3-l6) éclairant l'image débouchent sur des flancs latéraux anguleux (f1) de l'évidement marginal (F).

8. Endoscope spécial suivant la revendication 4, caractérisé par le fait que la partie d'observation d'ensemble (ÜS) de la sonde comporte un dispositif optique (BO') transmettant l'image et au moins un dispositif optique respectif (17, 18) éclairant l'image situé sur un côté respectif du dispositif optique (BO') transmettant l'image, de telle sorte que les axes optiques sont parallèles entre eux.

9. Endoscope spécial suivant la revendication 8, caractérisé par le fait que la partie d'observation d'ensemble (ÜS) de la sonde comporte, sur son côté longitudinal tourné vers la partie formant macroscope (MS) de la sonde, un double ensemble de dispositifs optiques (17-19) éclairant l'image.

10. Endoscope spécial suivant la revendication 4 ou 8 et la revendication 3, caractérisé par le fait que le champ du canal de la partie d'observation d'ensemble (ÜS) de la sonde est disposé dans les demi-plaques (P1, P2) de la sonde en forme d'épée (e21), au voisinage de la zone du canal de la partie formant macroscope (MS) de la sonde, et que également la zone de la plaque pour la partie d'observation d'ensemble (ÜS) de la sonde comporte, dans la · zone de réception de son dispositif optique (BO') transmettant l'image, un évidement marginal (F'), à ·l'intérieur duquel sont disposées les faces terminales de réception et d'émission (bo2.2 ; se7-se9) de ces dispositifs optiques transmettant et éclairant l'image.

11. Endoscope spécial suivant l'une des revendications 2 à 10, caractérisé par le fait que des canaux vides (kl10, kl11) sont réalisés, dans la partie formant macroscope (MS) de la sonde et éventuellement dans la partie d'observation d'ensemble (ÜS) de la sonde, sous la forme de canaux d'amenée pour un air de blocage, à l'aide desquels, pendant une opération de lavage et de nettoyage des zones de surface (G1) devant être examinées, un rideau d'air peut être produit pour réaliser une protection vis-à-vis du salissement des dispositifs optiques (BO, bo1 ; se1, se2, se5, s6) au niveau de la fenêtre (F) et éventuellement des dispositifs optiques (BO', bo2.2, se7, se8).

FIG 1

FIG 2

FIG 3

2

FIG 4

FIG 5

4

FIG 6

FIG 7

FIG 8

EP 0 157 009 B1

FIG 9

FIG 10

FIG 11

FIG 13

FIG 12